Europäisches Patentamt

European Patent Office

Office européen des brevets

(11) Veröffentlichungsnummer: **0 175 107**
**B1**

(12) **EUROPÄISCHE PATENTSCHRIFT**

(45) Veröffentlichungstag der Patentschrift:
**17.11.88**

(21) Anmeldenummer: **85109612.3**

(22) Anmeldetag: **31.07.85**

(51) Int. Cl.⁴: **G 02 B 6/38**, G 02 B 6/44

(54) **Vorrichtung zur Halterung von zwei durch einen Spleiss miteinander verbundenen Lichtwellenleiter.**

(30) Priorität: **30.08.84 DE 3431937**

(43) Veröffentlichungstag der Anmeldung:
**26.03.86 Patentblatt 86/13**

(45) Bekanntmachung des Hinweises auf die Patenterteilung:
**17.11.88 Patentblatt 88/46**

(84) Benannte Vertragsstaaten:
**AT BE CH DE FR GB IT LI SE**

(56) Entgegenhaltungen:
**DE - A - 2 846 951**
**GB - A - 2 087 681**
**US - A - 4 057 448**

**PATENTS ABSTRACTS OF JAPAN, Band 7, Nr. 2, 7. Januar 1983, Seite 129 P 166; & JP - A - 57 163 211 (KOKUSAI DENSHIN DENWA K.K.) 07-10-1982**

(73) Patentinhaber: **Siemens Aktiengesellschaft Berlin und München, Wittelsbacherplatz 2, D-8000 München 2 (DE)**

(72) Erfinder: **Störk, Peter, Parkstrasse 3 b,
D-8196 Eurasburg (DE)**

**Beschreibung**

Die Erfindung bezieht sich auf eine Vorrichtung zur Halterung von zwei durch einen Spleiss miteinander verbundenen, insbesondere durch Glasfasern gebildeten Lichtwellenleitern, die jeweils mit wenigstens einer Umhüllung, insbesondere mit einem Schutzschlauch versehen sind.

Eine derartige Vorrichtung ist z.B. aus der Zeitschrift Elektrisches Nachrichtenwesen, Band 56, Nr. 4, 1981, Seiten 361 bis 363 bekannt. Nach dem bekannten Verfahren werden die Faserenden vor dem Spleissen von der Sekundär- und der Primärummantelung befreit, geritzt und in geeigneter Weise gebrochen. Die so vorbereiteten Fasern werden in V-Nuten eingelegt, mit Mikromanipulatoren aufeinander ausgerichtet und in axialer Richtung separiert. Daraufhin werden die Fasern mittels einer Schweissverbindung miteinander verbunden. Schliesslich wird die gespleisste Faser in einem Muffengehäuse untergebracht. Die Muffe liegt dabei zwischen zwei miteinander fluchtenden, mit einer Ummantelung versehenen, Glasfasern.

Weiterhin ist aus derselben Literaturstelle bekannt, eine weniger stabile Muffe zu verwenden, um die Spleisse in einem Regeneratorgehäuse zu schützen. Diese Muffe soll eine grössere Schleife einer Monomodefaser aufnehmen können, um Zusatzdämpfungen durch zu kleinen Biegeradius zu vermeiden.

Aufgabe der Erfindung ist es, eine Vorrichtung zur Halterung von zwei durch einen Spleiss miteinander verbundenen Lichtwellenleitern derart auszubilden, dass sich bei gekrümmter Führung wenigstens eines der Lichtwellenleiter ein möglichst platzsparender Aufbau ergibt. Insbesondere soll sich für eine Anordnung, bei der der Spleiss im Zuge einer gekrümmten Lichtwellenleiter-Verbindung angeordnet ist, bei vorgegebenem Mindestradius ein möglichst geringer Durchmesser der Schleife ergeben.

Gemäss der Erfindung wird die Vorrichtung zur Lösung dieser Aufgabe derart ausgebildet, dass sie aus einer Haltevorrichtung und einem in die Haltevorrichtung einsetzbaren Zugentlastungselement besteht, und dass das Zugentlastungselement zum Befestigen der Umhüllungen zwei Träger aufweist, die über ein biegsames bandförmiges Mittelstück miteinander verbunden sind und dass die Haltevorrichtung zwei fest miteinander verbundene Halter aufweist, in die die Träger einsetzbar sind und dass der gegenseitige Abstand der Halter kleiner als der gegenseitige Abstand der Träger im gestreckten Zustand des Zugentlastungselementes ist. Als Umhüllung kann dabei insbesondere ein Schutzschlauch oder eine Primärummantelung mit aufgesetzter Hülse sein.

Durch diese Massnahmen ergibt sich der Vorteil, dass sich bei vorgegebenen Abmessungen einer Anordnung mit Spleiss ein vorgegebener minimaler Biegeradius, der für die Dauerstandfestigkeit und für eine geringe Dämpfung der Glasfaser von wesentlicher Bedeutung ist, bei besonders geringem Baubedarf eingehalten werden kann.

In weiterer Ausgestaltung der Erfindung liegt das Mittelstück des in die Haltevorrichtung eingesetzten Zugentlastungselementes in einem die Verbindungsstelle der Glasfasern einschliessenden Teilbereich an einer ebenen Seitenfläche der Haltevorrichtung an, so dass die Verbindungsstelle in besonders geringem Masse mechanisch belastet ist.

Soll sich an einen gerade geführten Lichtwellenleiter ein weiterer Lichtwellenleiter mit gekrümmtem Verlauf anschliessen, so werden die Halter der Haltevorrichtung so angeordnet, dass das eine Ende und ein mittlerer Bereich des Mittelstückes an der ebenen Seitenfläche der Haltevorrichtung anliegen und dass das Mittelstück im anderen Endbereich einen gekrümmten Verlauf hat.

In weiterer Ausgestaltung der Erfindung sind beide Halter derart angeordnet, dass das Mittelstück des in die Haltevorrichtung eingesetzten Zugentlastungselementes in einem mittleren Teilbereich an der ebenen Seitenfläche der Haltevorrichtung anliegt und in beiden Endbereichen zu ein und derselben Seite hin gekrümmt ist. Durch diese Massnahmen ergibt sich ein besonders raumsparender Aufbau bei Anordnung der Vorrichtung im Zuge einer gekrümmt verlaufenden Lichtwellenleiter-Verbindung.

Man kann die Vorrichtung ferner derart ausbilden, dass wenigstens einer der Träger die Gestalt eines Zylinders hat und dass sich das bandförmige Mittelstück in radialer Richtung an einen unteren Bereich des zylindrischen Halters anschliesst und hochkant auf einer Ebene steht, in der sich die Grundflächen der zylindrischen Träger befinden. Ein derartiges Zugentlastungselement lässt sich auf einfache Weise als Kunststoff-Spritzteil herstellen und ist wirksam gegen ein Verbiegen in Richtungen geschützt, bei denen der Lichtwellenleiter Zugbeanspruchungen ausgesetzt wird.

Zweckmässigerweise ist die Vorrichtung derart ausgebildet, dass der zylindrische Träger in seinem oberen Teil mit einem Schlitz versehen ist, der mit dem bandförmigen Mittelstück fluchtet und dessen Breite höchstens gleich dem, insbesondere etwas kleiner als der Durchmesser der zugeordneten Umhüllung ist. Durch diese Massnahmen ergibt sich der Vorteil, dass Toleranzen in den äusseren Abmessungen der Umhüllungen der Lichtwellenleiter bei der Halterung in den Trägern in besonderem Masse ausgeglichen werden können.

Eine weitere zweckmässige Ausgestaltung der Vorrichtung besteht darin, dass der Halter eine U-profilförmige Seitenwand mit Boden hat und dass die Seitenwand im oberen Bereich mit einer Ausnehmung versehen ist, die auf der dem Mittelstück des in die Haltevorrichtung eingesetzten Zugentlastungselementes entgegengesetzten Seite angeordnet ist.

In weiterer Ausgestaltung der Erfindung hat die Haltevorrichtung die Form einer Wanne mit abgewinkelten Endbereichen und mit einem oberen inneren Rand ausgehenden Bund, dessen äussere Begrenzung mit der Aussenkontur der Halter fluchtet. Dabei ergibt sich eine auf einfache Weise als Kunststoff-Spritzteil herstellbare Haltevorrichtung mit grosser Formstabilität, so dass sie mit besonders kleinen Wandstärken auskommt.

Ein vorteilhaftes Verfahren zur Halterung eines Spleisses mittels der Vorrichtung besteht darin, dass die mittels eine Spleissvorrichtung miteinander verbundenen Lichtwellenleiter mit ihren Umhüllungen in die Halter eingesetzt und mit den Haltern mittels Klebstoff verbunden werden und dass das Zugentlastungselement bei gebogenem Mittelstück in die Halter eingesetzt wird. Vorzugsweise wird die Haltevorrichtung daraufhin mit einer dauerelastischen Vergussmasse gefüllt. Als Klebstoff wird vorzugsweise ein Schnellkleber verwendet.

Auf diese Weise lässt sich der Spleiss mittels der Vorrichtung durch eine kleine Zahl wenig zeitaufwendiger Verfahrensschritte haltern und schützen.

Die Vorrichtung lässt sich besonders vorteilhaft bei Spleissen zwischen elektrooptischen Bauteilen, insbesondere Sende- oder Empfangsmodulen der elektrooptischen Nachrichtenübertragungstechnik, mit Pigtail und einem vormontierten Lichtwellenleiter-Stecker verwenden.

Die Erfindung wird anhand der in den Figuren 1 bis 7 gezeigten Ausführungsbeispiele näher erläutert. Es zeigen

Fig. 1 die Bestandteile einer Vorrichtung zur Halterung von zwei durch einen Spleiss miteinander verbundenen Lichtwellenleitern in perspektivischer Darstellung,

Fig. 2 ein abgewandeltes Zugentlastungselement,

Fig. 3 die Vorrichtung nach Fig. 1 im montierten Zustand.

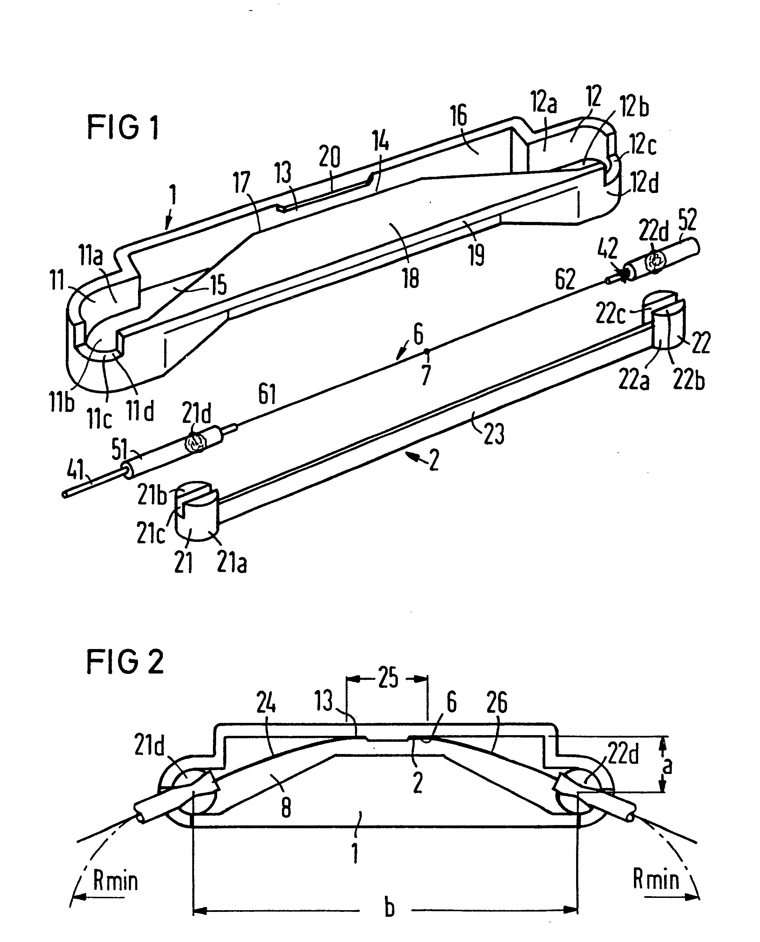

Ferner zeigen für die in Fig. 1 dargestellten Vorrichtung,

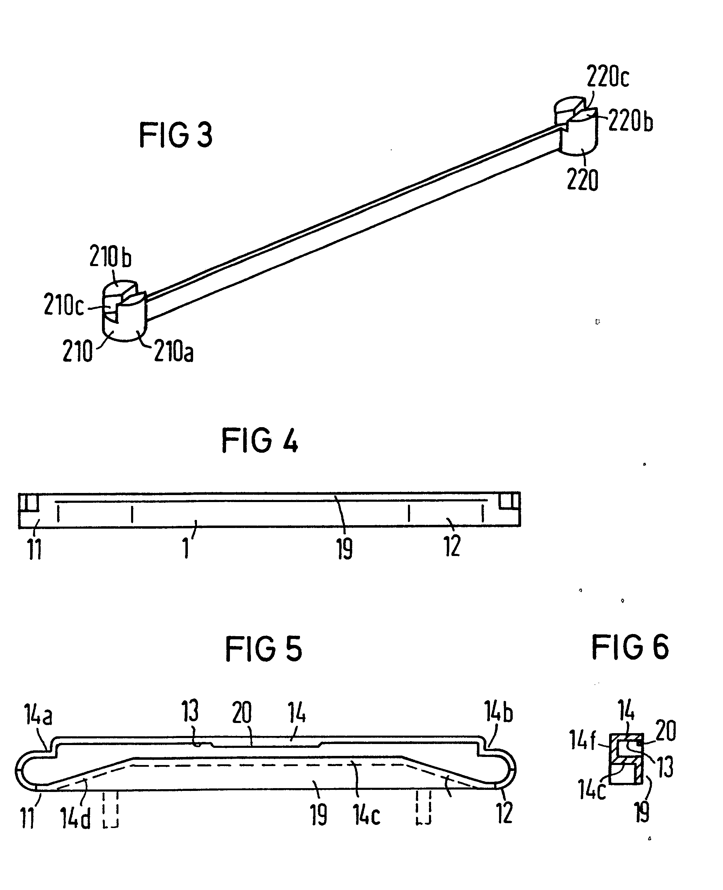

Fig. 4 eine Seitenansicht der Haltevorrichtung,

Fig. 5 eine Draufsicht der Haltevorrichtung,

Fig. 6 einen Schnitt durch die Haltevorrichtung,

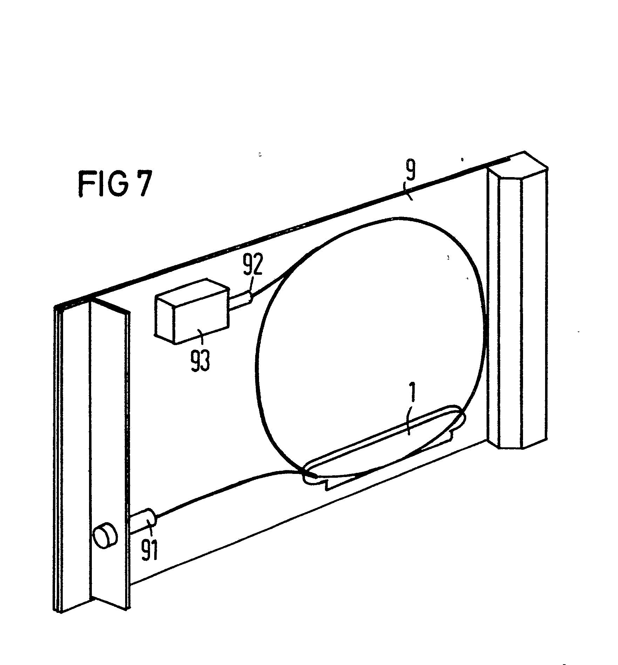

Fig. 7 zeigt ein Anwendungsbeispiel für die Vorrichtung nach Fig. 1.

Bei der Vorrichtung nach Fig. 1 sind die durch Glasfasern gebildeten Lichtwellenleiter 61 und 62 durch einen Spleiss miteinander verbunden. Die Lichtwellenleiter 61 und 62 sind mit Hilfe einer üblichen Spleissvorrichtung an der Verbindungsstelle 7 durch Schweissen verbunden und bilden den Lichtwellenleiter 6. In der Umgebung der Verbindungsstelle sind die Lichtwellenleiter 61 und 62 von ihrem Schutzschlauch und vom sogenannten Coating, d.h. von ihrer Primär- und Sekundärumhüllung befreit.

Um die Lichtwellenleiter zu schützen, wird — während sich der Spleiss in der nicht dargestellten Spleissvorrichtung befindet — in Pfeilrichtung das Zugentlastungselement 2 mit seinen Trägern 21 und 22 auf die Umhüllungen 51 und 52 der beiden Lichtwellenleiter gesteckt. Das Zugentlastungselement 2 lässt sich in die Haltevorrichtung 1 einsetzen. Es hat zwei Träger 21 und 22, an denen sich die Enden der Umhüllungen 51 und 52 befestigen lassen und die über das biegsame bandförmige Mittelstück 23 miteinander verbunden sind.

Die Haltevorrichtung 1 hat die Form einer Wanne, deren abgewinkelte Endbereiche 15 und 16 als Halter 11 und 12 ausgebildet sind, in die sich die Träger 21 und 22 einsetzen lassen. Vom oberen inneren Rand 17 geht ein Bund 18 aus, dessen äussere Begrenzung 19 mit den Aussenkonturen 11d und 12d der Halter 11 und 12 fluchtet.

Wie aus Fig. 2 hervorgeht, ist der gegenseitige Abstand b der Halter 11 und 12 kleiner als der gegenseitige Abstand der Träger 21, 22 im gestreckten Zustand des Zugentlastungselementes 2. Das Zugentlastungselement 2 lässt sich daher nur in gebogenem Zustand in die Haltevorrichtung 1 einsetzen. Da sich der Lichtwellenleiter 6 neben dem als Band ausgebildeten Mittelstück 23 befindet, wird er bei der einzig möglichen Biegung des Bandes nicht auf Zug oder Druck beansprucht.

Wie Fig. 2 ferner zeigt, liegt das Mittelstück 23 des in die Haltevorrichtung 1 eingesetzten Zugentlastungselementes 2 in einem mittleren Teilbereich 25, der die Verbindungsstelle 7 der Lichtwellenleiter 61, 62 einschliesst, an der ebenen Seitenfläche 13 der Haltevorrichtung 1 an. Die Seitenfläche 13 befindet sich im Innern der Haltevorrichtung 1 auf der Rückwand 14, deren Ausnehmung in einem mittleren Teilbereich die Form einer Nut hat.

Entsprechend Fig. 2 sind beide Halter 11 und 12 derart angeordnet, dass das Mittelstück 23 des in die Haltevorrichtung 1 eingesetzten Zugentlastungselementes 2 im mittleren Teilbereich 25 an der ebenen Seitenfläche 13 der Haltevorrichtung 1 anliegt und in beiden Endbereichen 24 und 26 zu ein und derselben Seite hin gekrümmt ist.

Der Abstand a, den die Achsen der Halter 11 und 12 von der ebenen Seitenfläche 13 haben und der gegenseitige Abstand b der Halter 11 und 12 bestimmen die Biegelinie des Lichtwellenleiters 6 im Bereich der Vorrichtung. Der Winkel stellt sich entsprechend den Abständen a und b ein. Im weiteren Verlauf ausserhalb der Spleisshalterung gilt für die Glasfaser der minimale Radius $R_{min}$.

Die Träger 21 und 22 haben die Gestalt eines Zylinders. Das bandförmige Mittelstück 23 schliesst sich in radialer Richtung an den unteren Bereich 21a und 22a des zylindrischen Halters 21 bzw. 22 an und steht hochkant auf einer Ebene, die durch die Grundflächen der zylindrischen Träger 21 und 22 bestimmt ist.

Die zylindrischen Träger 21 und 22 sind in ihrem oberen Teil 21b bzw. 22b mit einem Schlitz 21c bzw. 22c versehen, der mit dem bandförmigen Mittelstück 23 fluchtet und dessen Breite etwas kleiner als der Durchmesser der zugeordneten Umhüllung 51 bzw. 52 ist.

Man kann entsprechend Fig. 1 gleiche Träger 21 und 22 für Glasfasern mit unterschiedlich dicken Schutzschläuchen verwenden, indem man einen dünneren Schutzschlauch 41 mit einer Hülse 51 versieht und diese an einer Klebstelle 510 mittels Schnellkleber befestigt, so dass sich die gewünschte Dicke ergibt. Bildet man die Träger des Zugentlastungselementes entsprechend Fig. 3 aus, so lassen sich auch kleinere Unterschiede der Dicke ausgleichen. Dabei ist der zylindrische Träger 210 bzw. 220 in seinem oberen Teil 210b bzw. 220b mit einer Ausnehmung 210c bzw. 220c nach Art eines Schlitzes versehen, die sich von beiden Seiten zur Mitte hin verengt. Die Ausnehmung an der engsten Stelle ist etwas schmaler als der Durchmesser der vorgesehenen Umhüllungen.

Die Halter 11 und 12 haben jeweils eine U-profilförmige Seitenwand 11a bzw. 12a mit Boden 11b bzw. 12b. Die Seitenwände 11a und 12a sind im oberen Bereich jeweils mit einer Ausnehmung 11c bzw. 12c versehen, die dem Mittelstück 23 des in die Haltevorrichtung 1 eingesetzten Zugentlastungselementes gegenüberliegt.

Weitere Einzelheiten der in Fig. 1 und Fig. 3 gezeigten Vorrichtung gehen aus den Figuren 4 bis 6 hervor.

Die Seitenansicht der Haltevorrichtung 1 zeigt oben die äussere Begrenzung 19 des Bundes 18, der sich zwischen den Haltern 11 und 12 erstreckt.

In der Draufsicht nach Fig. 5 ist zu sehen, dass die Haltevorrichtung 1 eine Ausnehmung mit einer ebenen Seitenfläche 13 aufweist. Die Halter 11 und 12 haben U-förmiges Profil und sind mit den Öffnungen der «U» einander zugewandt. Die Achsen der Halter 11 und 12 sind – bezogen auf die ebene Fläche 13 – nach vorn versetzt angeordnet. Die U-Profile der Halter 11 und 12 sind über kurze Seitenwände 14a und 14b mit der Rückwand 14 verbunden. Zwischen der Vorderwand 14c und den U-Profilen liegt ein abgeschrägter Übergang 14d bzw. 14e.

Wie sich aus Fig. 6 ergibt, hat die Haltevorrichtung einen Querschnitt mit grosser Formstabilität. Der wannenförmige Teil mit dem Boden 14f und den Wänden 14 und 14c ist durch den Bund 19 versteift.

Bei der Herstellung eines Spleisses wird die Vorrichtung zweckmässigerweise wie folgt benutzt:

Zunächst wird der Spleiss wie üblich in einer Spleissvorrichtung hergestellt. Danach wird das entsprechend der Länge des Spleisses und dem Durchmesser der Umhüllungen ausgebildete Zugentlastungselement 2 mit seinen Trägern 21 und 22 an beiden Umhüllungen 51 und 52 mit Hilfe eines Schnellklebers befestigt. Der so entlastete Spleiss wird aus der Vorrichtung entnommen und in der Haltevorrichtung 1 montiert. Die Haltevorrichtung 1 bewirkt eine Biegung des bandförmigen Mittelstücks 23 und damit der miteinander verbundenen Glasfasern 61, 62. Durch die entsprechend ausgelegten Abmessungen von Haltevorrichtung 1 und Zugentlastungselement 2 werden die gespleissten Glasfasern 61 und 62 im Bereich der Spleissstelle bzw. Verbindungsstelle 7 an die ebene Fläche 13 in der Haltevorrichtung angelegt und erst danach im erforderlichen Krümmungsradius geführt. Schliesslich kann die Haltevorrichtung zum besseren Schutz der Glasfaser 61, 62 mit einer Vergussmasse gefüllt werden, die zweckmässigerweise dauerelastisch ist.

Für die in Fig. 1 gezeigte Anordnung ergeben sich die folgenden Verfahrensschritte:

1. Die Glasfaser 61, die eine für den Halter zu dünne Ummantelung 41 aufweist, wird mit der Hülse 51 versehen.
2. Die Glasfasern 61 und 62 werden durch Schweissen miteinander verbunden.
3. Das Zugentlastungselement 2 wird mit seinen Trägern über die Kabelenden gedrückt.
4. Die Kabelenden werden an den Trägern 21 und 22 mit einem Schnellkleber befestigt.
5. Das Zugentlastungselement 2 wird aus der Schweissvorrichtung genommen und in die Haltevorrichtung eingelegt.
6. Die Haltevorrichtung wird mit Silicon-Vergussmasse gefüllt.

Gegebenenfalls kann die Rückwand 14 der Haltevorrichtung 1 auf der Innenseite oben mit einer oder mehreren Rippen 20 versehen sein, die verhindern, dass die Glasfaser vor dem Vergiessen aus dem Innenraum hervorsteht.

Der Schnellkleber benetzt zweckmässigerweise auch die zur Zugentlastung dienenden, gegebenenfalls freigelegten Kunststofffasern des Kabels oder ähnliche Zugentlastungen, so dass die äussere Umhüllung fest mit den Trägern des Zugentlastungselementes 2 verbunden ist. Wenn die Glasfaser lose in der Umhüllung gelagert ist, werden zweckmässigerweise auch die Glasfasern 61 und 62 mit dem Zugentlastungselement 2 fest verbunden, um zu verhindern, dass sich die gebogene Faser 6 zur Entspannung in die Umhüllung 51 bzw. 52 schiebt und so so die gerade Länge der Faser 6, die an der Fläche 13 anliegt, verkürzt. Diese festen Verbindungen werden vorzugsweise mittelbar dadurch vorgenommen, dass die Glasfasern 61 und 62 an ihrer Austrittsstelle mit der zugehörigen Umhüllung 51 bzw. 52 verklebt werden.

Fig. 7 zeigt als bevorzugtes Anwendungsbeispiel eine Baugruppe, bei der die Vorrichtung in Verbindung mit einem Spleiss verwendet ist, der zwischen dem Pigtail eines Sendemoduls und dem Pigtail eines vormontierten Lichtwellenleiter-Steckers angeordnet ist.

Der vormontierte Lichtwellenleiter-Stecker 91 ist mit dem Pigtail 92 des Lasermoduls 93 verbunden. Der Spleiss ist in der Baugruppe 9 untergebracht. Die Länge des Spleisses einschliesslich der erforderlichen Krümmungsradien ist in vorteilhafter Weise besonders klein.

## Patentansprüche

1. Vorrichtung zur Halterung von zwei durch einen Spleiss miteinander verbundenen, insbesondere durch Glasfasern gebildeten Lichtwellenleitern (61, 62), die jeweils mit wenigstens einer Umhüllung, insbesondere mit einem Schutzschlauch (51, 52) versehen sind, dadurch gekennzeichnet, dass die Vorrichtung aus einer Haltevorrichtung (1) und einem in die Haltevorrichtung (1) einsetzbaren Zugentlastungselement (2) besteht und dass das Zugentlastungselement (2) zum Befestigen der Umhüllungen (51, 52) zwei Träger (21, 22) aufweist, die über ein biegsames bandförmiges Mittelstück (23) miteinander verbunden sind und dass die Haltevorrichtung (1) zwei fest miteinander verbundene Halter (11, 12) aufweist, in die die Träger (21, 22) einsetzbar sind und dass der gegenseitige Abstand (b) der Halter (11, 12) kleiner als der gegenseitige Abstand der Träger (21, 22) im gestreckten Zustand des Zugentlastungselementes ist.

2. Vorrichtung nach Anspruch 1, dadurch gekennzeichnet, dass das Mittelstück (23) des in die Haltevorrichtung (1) eingesetzten Zugentlastungselementes (2) in einem die Verbindungsstelle (7) der Lichtwellenleiter (61, 62) einschliessenden Teilbereich (25) an einer ebenen Seitenfläche (13) der Haltevorrichtung (1) anliegt.

3. Vorrichtung nach Anspruch 1 und 2, dadurch gekennzeichnet, dass beide Halter (11, 12) derart angeordnet sind, dass das Mittelstück (23) des in die Haltevorrichtung (1) eingesetzten Zugentlastungselementes (2) in einem mittleren Teilbereich (25) an der ebenen Seitenfläche (13) der Haltevorrichtung (1) anliegt und in beiden Endbereichen (24, 26) zu ein und derselben Seite hin gekrümmt ist.

4. Vorrichtung nach einem der Ansprüche 1 bis 3, dadurch gekennzeichnet, das wenigstens einer der Träger (21, 22) die Gestalt eines Zylinders hat und dass sich das bandförmige Mittelstück (23) in radialer Richtung an einen unteren Bereich (21a, 22a) des zylindrischen Halters (21, 22) anschliesst und hochkant auf einer Ebene steht, in der sich die Grundflächen der zylindrischen Träger (21, 22) befinden.

5. Vorrichtung nach Anspruch 4, dadurch gekennzeichnet, dass der zylindrische Träger (21, 22) in seinem oberen Teil (21b, 22b) mit einem Schlitz (21c, 22c) versehen ist, der mit dem bandförmigen Mittelstück (23) fluchtet und dessen Breite höchstens gleich dem, insbesondere etwas kleiner als der Durchmesser der zugeordneten Umhüllung (51, 52) ist.

6. Vorrichtung nach Anspruch 3, dadurch gekennzeichnet, dass der zylindrische Träger (210, 220) in seinem oberen Teil (210b, 220b) mit einer Ausnehmung (210c, 220c) nach Art eines Schlitzes versehen ist, die sich von beiden Seiten zur Mitte hin verengt und dass die Breite der Ausnehmung an der engsten Stelle etwas kleiner als der Durchmesser des zugeordneten Schutzschlauches (51, 52) ist.

7. Vorrichtung nach Anspruch 6, dadurch gekennzeichnet, dass der Halter (11, 12) eine U-profilförmige Seitenwand (11a, 12a) mit Boden (11b, 12b) hat und dass die Seitenwand (11a, 12a) im oberen Bereich mit einer Ausnehmung (11c, 12c) versehen ist, die auf der dem Mittelstück (23) des in die Haltevorrichtung (1) eingesetzten Zugentlastungselementes (2) entgegengesetzten Seite angeordnet ist.

8. Vorrichtung nach einem der Ansprüche 1 bis 7, dadurch gekennzeichnet, dass die Haltevorrichtung (1) die Form einer Wanne mit abgewinkelten Endbereichen (15, 16) und mit einem vom oberen inneren Rand (17) ausgehenden Bund (18) hat, dessen äussere Begrenzung (19) mit der Aussenkontur (11d, 12d) der Halter (11, 12) fluchtet.

9. Verfahren zur Halterung eines Spleisses mittels einer Vorrichtung nach einem der Ansprüche 1 bis 8, dadurch gekennzeichnet, dass die mittels einer Spleissvorrichtung miteinander verbundenen Lichtwellenleiter (61, 62) mit ihren Umhüllungen (51, 52) in die Halter (21, 22) eingesetzt und mit den Haltern (21, 22) mittels Klebstoff (21d, 22d) verbunden werden und dass das Zugentlastungselement (2) bei gebogenem Mittelstück (23) in die Halter (11, 12) eingesetzt wird und dass die Haltevorrichtung vorzugsweise mit einer dauerelastischen Vergussmasse gefüllt wird.

10. Verwendung einer Vorrichtung oder eines Verfahrens nach einem der vorhergehenden Ansprüche, bei Spleissen zwischen elektrooptischen Bauteilen, insbesondere Sende- oder Empfangsmodulen der elektrooptischen Nachrichtenübertragungstechnik, mit Pigtail und einem vormontierten Lichtwellenleiter-Stecker.

**Revendications**

1. Dispositif servant à maintenir deux guides d'ondes optiques (61, 62), qui sont reliés entre eux par une épissure, sont formés notamment par des fibres de verre et comportent chacun au moins une gaine, notamment un tuyau de protection (51, 52), caractérisé par le fait que le dispositif est constitué par un dispositif de maintien (1) et par un élément (2) de décharge des tractions, pouvant être inséré dans le dispositif de maintien (1), et que l'élément (2) de décharge des tractions comporte, pour la fixation des gaines (51, 52), deux supports (21, 22) qui sont reliés entre eux par l'intermédiaire d'une partie médiane (23) en forme de bande flexible, et que le dispositif de maintien (1) comporte deux supports (11,12) reliés rigidement entre eux, dans lesquels les supports (21, 22) peuvent être insérés, et que la distance réciproque (b) entre les supports (11, 12) est inférieure à la distance réciproque des supports (21, 22) lorsque l'élément de décharge des tractions est à l'état étiré.

2. Dispositif suivant la revendication 1, caractérisé par le fait que la partie médiane (23) de l'élément (2) de décharge des tractions, inséré dans le dispositif de maintien (1), s'applique dans une zone partielle (25) incluant le point de jonction (7) des guide d'ondes optiques (61, 62), contre une surface latérale plane (13) du dispositif de maintien (1).

3. Dispositif suivant les revendications 1 et 2, caractérisé par le fait que les deux supports (11, 12) sont disposés de telle sorte que la partie médiane (23) de l'élément (2) de décharge des tractions, inséré dans le dispositif de maintien (1) s'applique, dans une zone partielle médiane (25), contre la surface latérale plane (13) du dispositif de maintien (1) et est cintrée, au niveau des deux zones d'extrémité (14, 26), en direction d'un même côté.

4. Dispositif suivant l'une des revendications 1 à 3, caractérisé par le fait qu'au moins l'un des supports (21, 22) possède la forme d'un cylindre et que la partie médiane en forme de bande (23) se raccorde, dans une direction radiale, à une zone inférieure (21a, 22a) du support cylindrique (21, 22) et est disposée perpendiculairement à un plan dans lequel sont situées les surfaces de base des supports cylindriques (21, 22).

5. Dispositif suivant la revendication 4, caractérisé par le fait que le support cylindrique (21, 22) comporte, dans sa partie supérieure (21b, 22b), une fente (21c, 22c), qui est alignée avec la partie médiane en forme de bande (23) et dont la largeur est égale au maximum et notamment est légèrement inférieure au diamètre de la gaine associée (51, 52).

6. Dispositif suivant la revendication 3, caractérisé par le fait que le support cylindrique (210, 220) comporte, dans sa partie supérieure (210b, 220b), un évidement (210c, 220c) réalisé à la manière d'une fente, qui se rétrécit à partir des deux côtés en direction du centre et que la largeur de l'évidement au niveau de sa partie la plus étroite est légèrement inférieure au diamètre du milieu de protection associé (51, 52).

7. Dispositif suivant la revendication 6, caractérisé par le fait que le support (11, 12) possède une paroi latérale (11a, 12a) en forme de profilé en U comportant un fond (11b, 12b), et que la paroi latérale (11a, 12a) comporte dans sa partie supérieure, un évidement (11c, 12c), qui est située sur le côté opposé à la partie médiane (23) de l'élément (2) de décharge des tractions inséré dans le dispositif de support (1).

8. Dispositif suivant l'une des revendications 1 à 7, caractérisé par le fait que le dispositif de support (1) possède la forme d'une cuvette comportant des zones d'extrémité coudées (15, 16) et munie d'un flasque (18) qui s'étend à partir du bord intérieur supérieur (17) et dont la limite extérieure (19) est alignée avec le contour extérieur (11d, 12d) des supports (11, 12).

9. Procédé pour maintenir une épissure à l'aide d'un dispositif suivant l'une des revendications 1 à 8, caractérisé par le fait qu'on introduit les guides d'ondes optiques (61, 62) reliés entre eux au moyen d'un dispositif d'épissage et munis de leurs gaines (51, 52), dans les supports (21, 22) et qu'on les relie aux supports (21, 22) à l'aide d'un adhésif (21d, 22d), et qu'on insère l'élément (2) de décharge des tractions dans les supports (11, 12) en repliant la partie médiane (23) et qu'on remplit le dispositif de maintien de préférence avec une masse de scellement possédant une élasticité permanente.

10. Utilisation d'un dispositif ou d'un procédé suivant l'une des revendications précédentes dans le cas d'un épissage réalisé entre deux composants électro-optiques, notamment des modules d'émission ou de réception de la technique électro-optique de transmission d'information comportant une queue de cochon et un connecteur de guides d'ondes optiques, préalablement assemblé.

**Claims**

1. A device for supporting two light-waveguides (61, 62) which are connected to one another by a splice and which are formed, in particular, by glass fibres and hwich are each provided with at least one casing, in particular a protective tube (51, 52) characterised in that the device comprises a support device (1) and a tension-relieving element (2) which can be inserted into the support device (1), and that, for the attachment of the casings (51, 52), the tension-relieving element (2) comprises two carriers (21, 22) which are connected to one another via a flexible, strip-like central component (23), and that the support device (1) comprises two holders (11, 12) which are permanently connected to one another, and into which the carriers (21, 2 can be inserted, and that the mutual spacing (b) between the holders (11, 12) is smaller than the mutual spacing between the carriers (21, 22) in the elongated state of the tension-relieving element.

2. A device as claimed in Claim 1, characterised in that the central component (23) of the tension-relieving element (2), inserted into the support device (1), abuts against a flat side surface (13) of the support device (1) in a sub-zone (25) which encloses the connection point (7) of the light-waveguides (61, 62).

3. A device as claimed in Claim 1 and 2, characterised in that the two holders (11, 12) are arranged such that the central component (23) of the tension-relieving element (2), inserted into the support device (1) abuts against the flat side surface (13) of the support device (1) in a central sub-zone (25) and is curved towards one and the same side at each of the two end zones (24, 26).

4. A device as claimed in one of Claims 1 to 3, characterised in that at least one of the carriers (21, 22) has the form of a cylinder, and that the strip-like central component (23) adjoins a lower zone (21a, 22a) of the cylindrical holder (21, 22) in the radial direction, and is arranged upright on a plane in which the base surfaces of the cylindrical carriers (21, 22) are located.

5. A device as claimed in Claim 4 characterised in that, in its upper region (21b, 22b), the cylindrical carrier (21, 22) is provided with a slot (21c, 22c) which aligns with the strip-like central component (23), and whose breadth is, at the maximum, equal to, and in particular somewhat smaller than, the diameter of the assigned casing (51, 52).

6. A device as claimed in Claim 3, characterised in that, in its upper region (20b, 220b), the cylindrical carrier (210, 220) is provided with a recess (210c, 220c) in the form of a slot which narrows from both sides towards the centre, and that the breadth of the recess at the narrowest point is somwhat smaller than the diameter of the assigned protective tube (51, 52).

7. A device as claimed in Claim 6, characterised in that the holder (11, 12) comprises a U-section

side wall (11a, 12a) with a base (11b, 12b), and that, in the upper region, the side wall (11a, 12a) is provided with a recess (11c, 12c) which is arranged on the side opposite to the central component (23) of the tension-relieving element (2) inserted into the support device (1).

8. A device as claimed in one of Claims 1 to 7, characterised in that the support device (1) has the form of a trough which has angled end zones (15, 16) and a flange (18) which commences from the upper inner edge (17) and whose outer boundary (19) aligns with the outer contour (11d, 12d) of the holders (11, 12).

9. A method of supporting a splice by means of a device as claimed in one of Claims 1 to 8, characterised in that the light-waveguides (61, 62) which are connected to one another the holders (21, 22) by means of adhesive (21d, 22d), and that, when the central component (23) is bent, the tension-relieving element (2) is inserted into the holders (11, 12), and that the support device is preferably filled with a permanently elastic casting compound.

10. Use of a device or a method claimed in one of the preceding Claims for splices between electro-optical components, in particular transmitting or receiving modules in electro-optical data transmission technology, with a pigtail and a pre-assembled light-waveguide plug.

FIG 1

FIG 2

## FIG 3

220c
220b
220

210 b
210c
210
210a

## FIG 4

11    1    19    12

## FIG 5

14a    13    20    14    14b

11    14d    19    14c    12

## FIG 6

14
14f    20
14c    13
19

3/3

FIG 7